# DEMANDE DE BREVET EUROPEEN

(11) **EP 0 578 534 A1**
(43) Date de publication de la demande: **12.01.1994**
(21) Numéro de dépôt: 93401663.5
(22) Date de dépôt: 28.06.1993
(51) Int. Cl.: E05F 11/44, E05F 11/48, E05F 15/00, E05F 15/16

(54) **Dispositif de sécurité pour ouvrants électriques de véhicule, notamment lève-vitre et toits ouvrants, et ouvrant incorporant ce dispositif**

(30) Priorité: 10.07.1992 FR 9208619
(71) Demandeur: ROCKWELL BODY AND CHASSIS SYSTEMS - FRANCE, en abrégé: ROCKWELL BCS - FRANCE, F-92082 Paris La Défense 2 (FR)
(72) Inventeur: Heckel, Robert Jacques, F-95240 Cormeilles (FR); Fin, Enrico, Denver Colorado 80231 (US); Gier, Achim Rudolph, F-92380 Garches (FR); Bonduel, Pascal, F-45600 Sully Sur Loire (FR)
(74) Mandataire: Martin, Jean-Paul

(57) **Abrégé**

Ce dispositif comprend des moyens mécaniques comportant un cliquet (25) établissant une liaison d'entraînement rigide entre un organe d'entrée menant (2) et un organe de sortie (22), coopérant avec un élément précontraint (31) qui tend à maintenir le cliquet en liaison avec l'organe d'entrée menant ou avec l'organe mené de sortie, tant que l'effort transmis par le cliquet reste inférieur à une valeur prédéterminée ; ce système interrompt automatiquement la chaîne cinématique d'entraînement de l'organe mobile en cas d'effort dépassant une valeur prédéterminée. Cet agencement rend le dispositif pratiquement insensible aux frottements et supprime l'incertitude sur le seuil de l'effort de déclenchement.

## Description

La présente invention a pour objet un dispositif de sécurité pour ouvrants électriques de véhicule, par exemple lève-vitre et toits ouvrants, cet ouvrant comprenant une roue dentée entraînée par une vis sans fin d'un motoréducteur et une chaîne cinématique de liaison entre la roue et l'organe mobile à entraîner (vitre ou toit ouvrant).

Comme on le sait, on utilise actuellement trois types de lève-vitre sur les véhicules automobiles :
a) lève-vitre à bras et secteur denté : le pignon de sortie du motoréducteur d'entraînement fait tourner un secteur denté autour d'un axe fixe par rapport à la portière, et un bras solidaire du secteur transmet le mouvement à la vitre.
b) lève-vitre à câble crémaillère : le pignon de sortie du motoréducteur d'entraînement entraîne directement le câble crémaillère qui coulisse dans une gaine (métallique ou plastique). A l'autre extrémité du câble est fixé un chariot, coulissant dans la gaine, sur lequel se fixe la vitre.
c) lève-vitre à câble torsadé (Bowden) : la sortie du motoréducteur entraîne un tambour sur lequel est enroulé un câble Bowden, qui transmet le mouvement à un chariot coulissant sur un rail de guidage, ce chariot étant fixé à la vitre.

Quand un obstacle se trouve sur le parcours de fermeture de la vitre, le système doit reconnaître la présence d'un phénomène anormal et, si l'effort sur la vitre dépasse une valeur limite, la vitre ne doit pas continuer sa trajectoire, mais s'arrêter et au moins libérer l'effort. Cette libération de l'effort peut être obtenue soit en libérant la vitre qui descend sous un faible effort ou sous l'effet de son propre poids si le frottement dans le joint latéral le permet, soit en inversant le mouvement de la vitre qui est alors forcée à descendre.

Pour résoudre ce problème on a déjà réalisé des dispositifs électroniques ou électromécaniques qui comportent des capteurs de types différents pouvant déterminer les décélérations du moteur comparées aux variations de tension, ou bien les variations de courant absorbé, ainsi que le nombre de tours effectué qu'ils mémorisent, et qui constitue une image de la position de la vitre.

Toutefois ces dispositifs électroniques et électromécaniques présentent, entre autres inconvénients, celui d'être relativement onéreux, en raison de leur complexité, ce qui est évidemment un obstacle à leur diffusion en grande série. De plus ces mécanismes développent des frottements ou utilisent des pièces d'entraînement élastiques, qui ne permettent pas l'obtention d'un déclenchement fiable en valeur de l'effort, et en soudaineté du déclenchement.

L'invention a donc pour but de proposer un dispositif de sécurité pour ouvrants électriques dans lequel ces inconvénients ci-dessus sont éliminés.

Le dispositif de sécurité visé par l'invention, pour ouvrants électriques de véhicule, notamment lève-vitre et toits ouvrants, comprend un élément moteur tel qu'un motoréducteur et une chaîne cinématique de liaison avec l'organe mobile à entraîner, des moyens exclusivement mécaniques pour interrompre automatiquement la chaîne cinématique d'entraînement de l'organe mobile en cas d'effort dépassant une valeur prédéterminée, s'opposant à la course dudit organe mobile afin d'annuler totalement les forces motrices.

Conformément à l'invention lesdits moyens exclusivement mécaniques comprennent un premier cliquet agencé pour établir une liaison d'entraînement rigide entre un organe d'entrée menant et un organe de sortie de la chaine cinématique, coopérant avec un élément précontraint ou un second cliquet sollicité avec une force qui tend à maintenir ledit premier cliquet en liaison avec l'organe d'entrée menant ou avec l'organe mené de sortie, tant que l'effort transmis par le premier cliquet reste inférieur à ladite valeur prédéterminée.

Grâce à cette structure, la pièce d'entraînement n'est pas élastique, contrairement à certains dispositifs connus, de sorte que l'incertitude sur le seuil de l'effort de déclenchement est supprimée, ce qui constitue un avantage essentiel de l'invention.

De plus, la rigidité de la pièce d'entraînement assure la soudaineté du déclenchement et supprime des oscillations ergonomiquement désagréables à l'utilisation, observées dans certains systèmes antérieurs.

Enfin cet agencement est pratiquement insensible aux frottements.

Dans un premier type de réalisation conforme à l'invention, destiné à équiper des lève-vitre du type à bras et secteur denté, à câble crémaillère et à câble Bowden, lesdits moyens exclusivement mécaniques sont agencés à l'intérieur du motoréducteur, et comportent par exemple :
- une dent intérieure de la roue dentée ménagée dans un évidement de celle-ci,
- un cliquet articulé sur un plateau rotatif coaxial à la dite roue dentée autour d'un axe parallèle à celui de cette dernière, et dont une extrémité coopère avec ladite dent intérieure de la roue dentée afin d'entraîner le plateau en rotation lorsque la roue dentée tourne,
- un organe élastique précontraint, prenant appui sur le plateau et coopérant avec le cliquet d'autre part, afin de maintenir l'extrémité de ce dernier en appui contre la dent intérieure de la roue tant que l'effort transmis par cette dernière reste inférieur à la valeur prédéterminée, cet organe élastique pouvant basculer dans une seconde position stable dans laquelle il désaccouple le cliquet de la dent associée, lorsque l'effort transmis par cette dernière au cliquet dépasse ladite valeur prédéterminée.

De tels dispositifs purement mécaniques sont de structures simples et de ce fait peu coûteux.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en élévation simplifiée d'un ouvrant constitué par un lève-vitre électrique de véhicule, connu, du type à bras et secteur denté.

La figure 2 est une vue en élévation partielle simplifiée d'un ouvrant électrique selon un mode de réalisation de l'invention, du type à câble crémaillère.

La figure 3 est une vue en élévation partielle simplifiée d'un lève-vitre électrique selon l'invention, du type à câble Bowden.

La figure 4 est une vue en élévation d'une première forme de réalisation du dispositif de sécurité selon l'invention applicable aux trois types de lève-vitre représentés aux Fig. 1 à 3.

La figure 5 est une vue en élévation longitudinale partielle d'un lève-vitre à bras et secteur équipé d'un dispositif de sécurité suivant un deuxième mode de réalisation de l'invention.

La figure 6 est une vue en bout partielle suivant la direction F de la Fig.5.

La figure 7 est une vue en élévation longitudinale partielle d'une troisième forme de réalisation du dispositif de sécurité suivant l'invention, équipant un lève-vitre à bras et secteur denté.

La figure 8 est une vue en élévation partielle d'une quatrième forme de réalisation du dispositif de sécurité selon l'invention, équipant un lève-vitre à câble Bowden ou à câble crémaillère.

La figure 9 est une vue en élévation latérale du dispositif de la Fig.8.

La figure 10 est une vue en élévation d'une cinquième forme de réalisation du dispositif de sécurité selon l'invention, utilisable sur des lève-vitre à câble crémaillère ou à câble lisse.

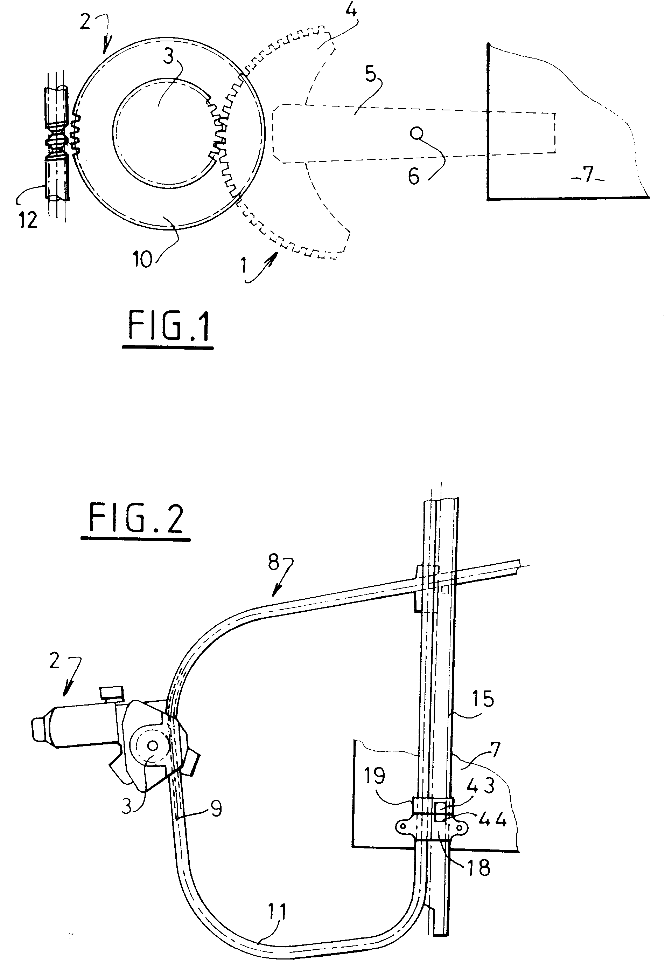

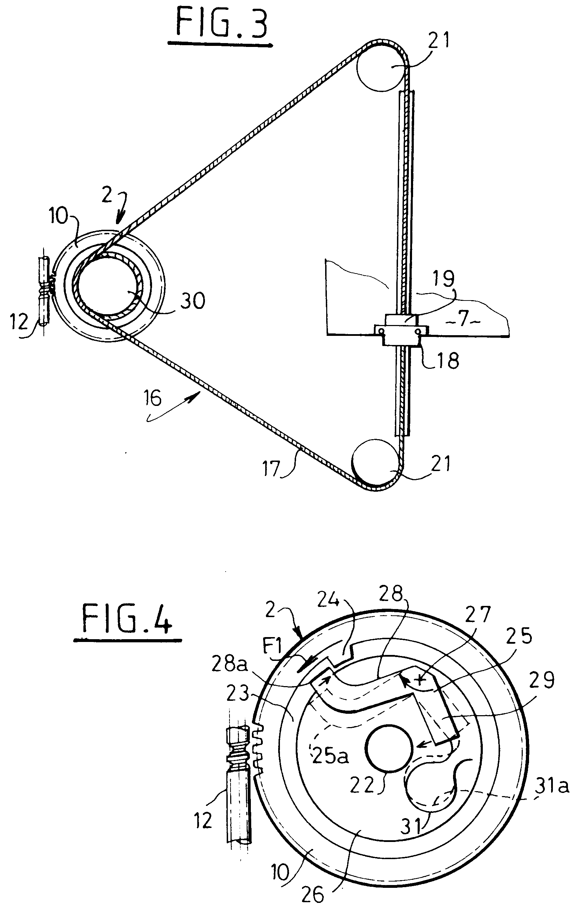

Les lève-vitre représentés aux Fig. 1 à 3 sont connus en soi, mais ont été représentés pour faciliter la compréhension des différents modes de réalisation de l'invention, représentés aux Fig. 4 à 10.

Le lève-vitre 1 de la Fig.1 comprend un motoréducteur 2 à vis sans fin 12 en prise avec une roue dentée 10 solidaire d'un pignon de sortie 3 qui engrène avec un secteur denté 4. Ce dernier est solidaire d'un bras 5 articulé autour d'un axe 6 et dont l'extrémité opposée au secteur 4 porte la vitre 7.

Le lève-vitre 8 illustré à la Fig.2 est du type à câble crémaillère 9 coulissant dans une gaine 11. Le câble 9 engrène avec le pignon 3 de sortie du motoréducteur 2. Au câble crémaillère 9 est fixé un chariot 18 lui-même relié à un chariot 19 supportant une vitre 7, les deux chariots 18, 19 pouvant coulisser le long d'un rail 15 de guidage.

Le lève-vitre 16 représenté à la Fig.3 est du type à câble Bowden 17 enroulé autour de poulies 21 de renvoi et d'un tambour 30 solidaire de la roue dentée 10 du motoréducteur 2. Au câble 17 est fixé un chariot 19 mécaniquement lié à un chariot 18 supportant la vitre 7.

L'invention prévoit des moyens exclusivement mécaniques pour interrompre automatiquement la chaîne cinématique d'entraînement de la vitre 7, au cas où celle-ci dans sa course de montée rencontre un obstacle dont la résistance à l'avancement de la vitre provoque un effort d'entraînement de celle-ci dépassant une valeur prédéterminée.

Dans le mode de réalisation représenté à la Fig.4, le dispositif de sécurité est applicable indifféremment à l'un quelconque des trois lève-vitre décrits ci-dessus, car l'interruption automatique de la chaîne cinématique en cas d'effort excessif intervient à l'intérieur du motoréducteur 2. A cet effet la roue dentée 10, entraînée par la vis 12 et montée rotativement autour d'un axe 22, présente un évidement 23 sur le bord duquel est ménagée une dent 24 faisant saillie dans la direction radiale. Un cliquet 25 est articulé sur un plateau 26 rotatif coaxialement à la roue dentée 10 autour d'un axe 27 parallèle à l'axe 22. Le cliquet 25 comporte deux branches en V 28, 29 s'étendant de part et d'autre de l'axe 27, la branche 28 comportant une partie terminale 28a qui vient prendre appui sur la dent 24 dans sa position normale d'embrayage, représentée en trait plein à la Fig.4. Dans cette position le cliquet 25 assure l'accouplement en rotation entre la roue dentée 10 et le plateau 26 ainsi que l'axe 22. Le cliquet 25 est maintenu dans cette position d'accouplement par un organe élastique précontraint 31, formé par un ressort dont une extrémité est liée à la branche 29 du cliquet 25 et l'extrémité opposée 31a est fixée au plateau 26.

Le ressort 31 maintient, en fonctionnement normal, l'extrémité 28a du cliquet 25 en appui sur la dent 24 et permet donc la transmission de l'effort sur le plateau 26, dans le sens de rotation indiqué par la flèche F1 qui correspond à la montée de la vitre. Le cliquet 25 est maintenu dans sa position tant que l'effort du ressort 31 engendre un couple autour de l'axe 22 supérieur à celui engendré en sens opposé (F1) par la dent 24.

Par conséquent tant que l'effort que le dispositif doit fournir à la vitre ne dépasse pas une certaine limite prédéterminée, le cliquet 25 reste en place et la vitre 7 monte. SI un obstacle s'oppose à la montée normale de la vitre, l'effort sur cette dernière augmente brusquement, de même que le couple F1 fourni par la roue 10 et la dent 24. Le couple opposé développé par le ressort 31 sur le bras 28 ne peut plus alors maintenir le cliquet 25, qui reçoit un couple plus grand de la dent 24 puisque l'effort à transmettre a augmenté. Ainsi à partir du moment où l'effort transmis par la dent 24 dépasse une valeur prédéterminée, correspondant aux caractéristiques du ressort 31, le cliquet 25 bascule dans sa deuxième position stable, représentée en traits mixtes (25a). De ce fait la transmission entre la dent 24 et le cliquet 25 cesse, puisque le contact entre la dent 24 et la partie terminale 28a est supprimé, et la sortie du motoréducteur liée au plateau 26 est donc désaccouplée du moteur.

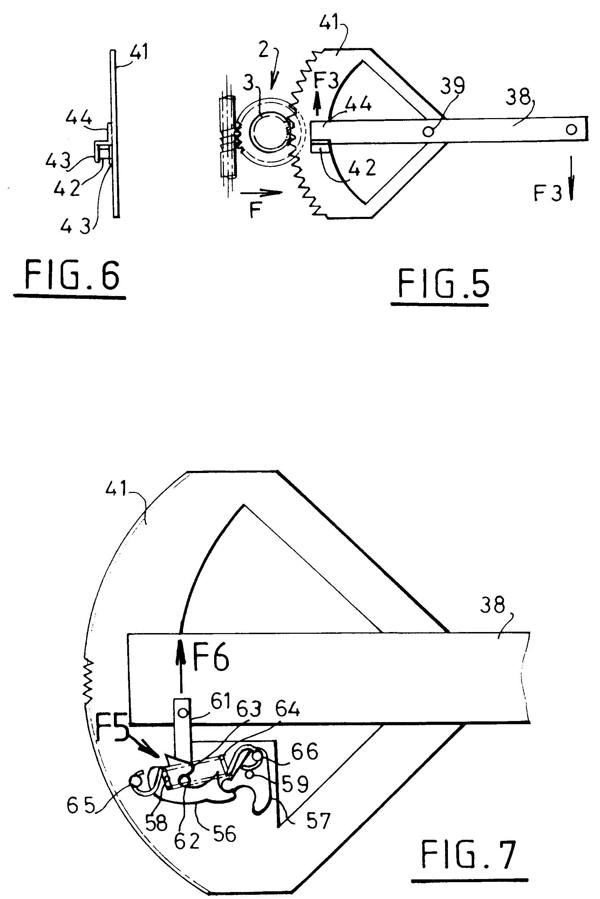

Dans le dispositif des Fig.5 et 6, appliqué uniquement aux lève-vitre du type à bras et secteur denté la chaîne cinématique est interrompue entre le bras et le secteur denté du lève-vitre.

Le bras 38 fait monter ou descendre la vitre (non représentée) en basculant autour d'un axe 39. Le bras 38 est entraîné par le secteur 41 avec lequel il bascule autour de l'axe 39 pour faire monter ou descendre la vitre. On peut donc prévoir une sécurité qui permet un désaccouplement automatique du bras 38 et du secteur 41 à partir d'un effort de valeur prédéterminée.

Le dispositif de sécurité comprend un aimant 42 entouré de deux plaques d'armature 43 et fixé au secteur denté 41, ainsi qu'une pièce ferromagnétique fixée au bras 38, par exemple une pièce 44 en L. La pièce 44, réalisée notamment en tôle d'acier, peut être une pliure monobloc avec le bras 38 ou rapportée à celui-ci. Elle est placée au contact des armatures 43 qui concentrent le flux de l'aimant 42 sur leurs surfaces de contact. La pièce 44 est donc attirée par les armatures 43 avec une certaine force, et retient ainsi le bras 38 solidarisé avec le secteur 41, tant que l'effort F3 exercé sur le bras 38 reste insuffisant pour vaincre la force d'attraction de l'aimant 42 (compte tenu de la longueur des bras de levier de part et d'autre de l'axe 39). Si par contre l'effort F3 sur la vitre dépasse une valeur prédéterminée, le bras 38 va se décoller des armatures 43 de l'aimant 42, et donc désaccoupler la vitre du mouvement d'entraînement fourni par le secteur 41.

Le dispositif de sécurité illustré à la Fig.7 comprend deux cliquets 56 et 57, articulés sur des axes respectifs 58, 59 fixés au secteur 41. Un doigt 61 solidaire du bras 38, est pourvu d'un ergot terminal 62 engagé dans un évidement du cliquet 56 délimité par un bec 63 dudit cliquet 56. Un ressort 64, par exemple hélicoïdal, a l'une de ses extrémités fixée au secteur 41 par accrochage à un pion 65, tandis que son autre extrémité est accrochée à un pion 66 porté par le cliquet 57. Ce dernier est ainsi élastiquement sollicité par le ressort 64 en appui sur une extrémité du cliquet 56, sur lequel est exercé un couple F5 tendant à maintenir l'ergot 62 encliqueté dans l'évidement du bec 63 du cliquet 56.

Cet encliquetage est maintenu tant que l'effort transmis à l'ergot 62 par le cliquet 56 reste inférieur à une valeur prédéterminée. Si un obstacle s'oppose à la fermeture de la vitre, l'effort que doit transmettre le cliquet 56 au doigt 61, par l'intermédiaire de l'ergot terminal 62, et qui est opposé au couple F5, finit par devenir suffisant (flèche F6) pour faire basculer le cliquet 56 (dans le sens anti-horaire sur la Fig.11), en étirant le ressort 64. Le cliquet 56 est ainsi libéré en rotation par dégagement de l'ergot 62 par rapport au bec 63, ce qui provoque le désaccouplement du secteur 41 par rapport au bras 38.

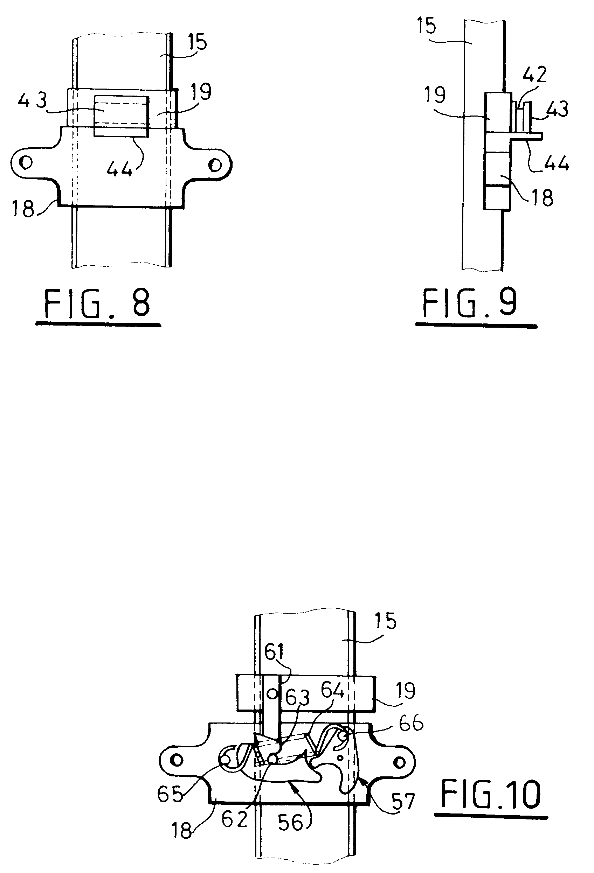

Dans la réalisation des Fig.8 et 9 pour lève-vitre à câble crémaillère et à câble Bowden, l'interruption des chaînes cinématiques d'entraînement de la vitre est réalisée entre les deux chariots 18 et 19 solidarisés respectivement avec la vitre 7 et le câble 9 ou 17. Il suffit alors de relier les deux chariots 18, 19 en fonctionnement normal et de les désaccoupler automatiquement en cas d'obstacle rencontré par la vitre. Pour ce faire on utilise les mêmes systèmes que ceux représentés aux Fig.5 et 6 pour séparer le bras 38 et le secteur denté 41. Ainsi la sécurité illustrée aux Fig.8 et 9 est la même que celle représentée aux Fig.5 et 6, de sorte que les mêmes références numériques ont été utilisées, la seule différence étant que le secteur 41 et le bras 38 sont ici remplacés respectivement par les chariots 19 et 18. Le fonctionnement est par ailleurs le même et n'a donc pas besoin d'être à nouveau décrit.

En plus des avantages techniques précédemment cités, les différents modes de réalisation décrits ci-dessus présentent le suivant : de manière inhérente à leur structure, dès franchissement du seuil de déclenchement, la rupture de la ligne cinématique s'amplifie pour annuler brutalement le mouvement d'entraînement. Ainsi, dans les systèmes à aimant, dès que l'entrefer croît très légèrement, les forces magnétiques d'entraînement diminuent de façon si considérable que l'entraînement cesse. Ce phénomène de diminution de l'entraînement s'emballe de manière quasi-"exponentielle". De même dans les structures à cliquets, ce même phénomène évolue suivant une loi sinusoïdale de très faible période.

L'invention n'est pas limitée aux divers modes de réalisation décrits et peut comporter de nombreuses variantes d'exécution. Ainsi par exemple il va de soi que le positionnement de l'aimant 42 et de la pièce 44 associée (Fig.5 et 6) peut être inversé par rapport à celui représenté, l'aimant 42 étant alors solidaire du bras 38 tandis que la pièce ferromagnétique 44 est solidaire du secteur 41. Il en est de même des autres dispositifs décrits, notamment ceux des Fig.8 et 9, la position sur les chariots respectifs 18 et 19 de leurs éléments d'accouplement pouvant être inversée par rapport à celle représentée. De manière plus générale, les dispositifs de sécurité représentés peuvent être remplacés par tous moyens équivalents dans la mesure où il s'agit de moyens exclusivement mécaniques, excluant tout circuit électrique. Ces dispositifs de sécurité sont particulièrement peu onéreux, tout en étant d'un fonctionnement très fiable. L'invention est applicable sans difficulté aux toits ouvrants de véhicule.

## Revendications

1. Dispositif de sécurité pour ouvrants électriques de véhicule, notamment lève-vitre et toits ouvrants, comprenant un élément moteur tel qu'un motoréducteur (2) et une chaîne cinématique de liaison avec l'organe mobile (7) à entraîner, des moyens exclusivement mécaniques (10, 24, 25, 31,...etc) pour interrompre automatiquement la chaîne cinématique d'entraînement de l'organe mobile en cas d'effort dépassant une valeur prédéterminée, s'opposant à la course dudit organe mobile afin d'annuler totalement les forces motrices, caractérisé en ce que lesdits moyens exclusivement mécaniques comprennent un premier cliquet (25 ou 56) agencé pour établir une liaison d'entraînement rigide entre un organe d'entrée menant (2, 24; 41) et un organe de sortie (22; 61, 38) de la chaine cinématique, coopérant avec un élément précontraint (31) ou un second cliquet (57) sollicité avec une force qui tend à maintenir ledit premier cliquet en liaison avec l'organe d'entrée menant ou avec l'organe mené de sortie, tant que l'effort transmis par le premier cliquet reste inférieur à ladite valeur prédéterminée, de sorte que la rigidité dudit premier cliquet supprime l'incertitude sur le seuil de l'effort de déclenchement et en assure la soudaineté, cet agencement rendant de plus le dispositif pratiquement insensible aux frottements.

2. Dispositif selon la revendication 1, destiné à équiper des lève-vitre du type à bras (5) et secteur denté (4), à câble crémaillère (9) et à câble Bowden (17), caractérisé en ce que lesdits moyens exclusivement mécaniques sont agencés à l'intérieur du motoréducteur (2), et comportent par exemple :
- une dent (24) intérieure de la roue dentée (10) ménagée sur le bord d'un évidement (23) de celle-ci,
- un cliquet (25) articulé sur un plateau rotatif (26) coaxial à la dite roue dentée autour d'un axe (22) parallèle à celui de cette dernière, et dont une extrémité (28a) coopère avec ladite dent intérieure de la roue dentée afin d'entraîner le plateau en rotation lorsque la roue dentée tourne,
- un organe élastique (31) précontraint, prenant appui sur le plateau (26) et coopérant avec le cliquet d'autre part, afin de maintenir l'extrémité de ce dernier en appui contre la dent intérieure de la roue tant que l'effort transmis par cette dernière reste inférieur à la valeur prédéterminée, cet organe élastique pouvant basculer dans une seconde position stable (31a) dans laquelle il désaccouple le cliquet de la dent associée lorsque l'effort transmis par cette dernière au cliquet dépasse ladite valeur prédéterminée (Fig.4).

3. Dispositif selon la revendication 1, destiné à équiper un lève-vitre du type à bras (38) et secteur denté (41) coopérant avec un pignon (3) du moto-réducteur (2, comprenant des moyens pour désolidariser automatiquement le bras du secteur dès que l'effort s'opposant à la course de la vitre dépasse ladite valeur prédéterminée, dans lequel lesdits moyens comportent un système à deux cliquets (56, 57) articulés sur des axes respectifs (58, 59) fixés au secteur denté (41), un doigt (61) solidaire du bras (38), engagé dans un bec (63) d'un premier cliquet (56), un ressort (64) dont une extrémité est fixée au secteur (41) et l'autre au second cliquet (57), qu'il sollicite en appui contre le premier cliquet de telle manière que le doigt soit maintenu encliqueté dans le premier cliquet tant que l'effort transmis au doigt par le premier cliquet reste inférieur à ladite valeur prédéterminée (Fig.7).

4. Dispositif selon la revendication 1, destiné à équiper un lève-vitre du type à bras (38) et secteur denté (41) coopérant avec un pignon (3) du motoréducteur (2), comprenant des moyens pour désolidariser automatiquement le bras du secteur dès que l'effort s'opposant à la course de la vitre dépasse ladite valeur prédéterminée, dans lequel lesdits moyens comprennent un aimant (42) entouré de plaques d'armature (43) et fixé au bras (38) ou au secteur denté (41), et une pièce ferro-magnétique (44) fixée au secteur ou au bras, fermant le circuit magnétique de l'aimant de manière à solidariser le bras et le secteur dans les conditions normales de fonctionnement, tant que l'effort (F3) exercé par le secteur denté sur le bras reste insuffisant pour vaincre la force d'attraction de l'aimant (42). (Fig.5-6).

5. Dispositif selon la revendication 1, destiné à équiper un lève-vitre du type à câble Bowden (17) ou câble crémaillère (9) entraîné par le motoréducteur (2), dans lequel un premier chariot (19) est fixé au câble et un second chariot (18) est solidaire de la vitre, ces deux chariots étant mécaniquement liés et pouvant glisser sur un rail (15) de guidage, caractérisé en ce que des moyens sont prévus pour désaccoupler automatiquement les deux chariots l'un de l'autre lorsque l'effort d'entraînement du chariot solidaire de la vitre est supérieur à ladite valeur prédéterminée (Fig.8-9).

6. Dispositif selon la revendication 5, caractérisé en ce que les moyens de désaccouplement automatique comprennent un aimant (42) placé entre des armatures (43) fixées à l'un (19) des chariots, et un profilé (44) fixé au second chariot (18) en vis-à-vis de l'aimant, dont la force d'attraction sur le profilé maintient les deux chariots assemblés (Fig.8-9).

7. Dispositif selon la revendication 5, caractérisé en ce que lesdits moyens comportent un système à deux cliquets (56, 57) articulés sur des axes respectifs (58, 59) fixés à un premier chariot (18), un doigt (61) solidaire du second chariot (19) engagé dans un bec (63) d'un premier cliquet (56), un ressort (64) dont une extrémité est fixée au premier chariot et l'autre au second cliquet (57), qu'il sollicite en appui contre le premier cliquet de telle manière que le doigt soit maintenu encliqueté dans le premier cliquet tant que l'effort transmis au doigt par le premier cliquet reste inférieur à ladite valeur prédéterminée (Fig.10).
